Europäisches Patentamt

European Patent Office

Office européen des brevets

(19)

(11) Publication number: **0 126 515 B1**

# EUROPEAN PATENT SPECIFICATION

(12)

(45) Date of publication of patent specification: 24.07.91

(51) Int. Cl.⁵: **C08F 10/02, C08F 4/64**

(21) Application number: **84200726.2**

(22) Date of filing: **18.05.84**

The file contains technical information submitted after the application was filed and not included in this specification

(54) **Process for the (co)polymerization of ethylene.**

(30) Priority: **21.05.83 NL 8301822**

(43) Date of publication of application:
**28.11.84 Bulletin 84/48**

(45) Publication of the grant of the patent:
**24.07.91 Bulletin 91/30**

(84) Designated Contracting States:
**BE DE FR GB IT NL**

(56) References cited:
**GB-A- 1 235 062**
**GB-A- 1 500 873**
**US-A- 4 120 820**
**US-A- 4 189 553**

(73) Proprietor: **STAMICARBON B.V.**
**Mijnweg 1**
**NL-6167 AC Geleen(NL)**

(72) Inventor: **Coosemans, Luc Maria Constant**
**Tulpenstraat 194**
**B-3530 Houthalen(BE)**
Inventor: **The other inventor has agreed to waive his entitlement to designation**

EP 0 126 515 B1

Rank Xerox (UK) Business Services

## Description

The invention relates to a process for the preparation of polyethylene or of ethylene copolymers containing minor amounts of at most 15 moles % of one or more alkenes with 3-15 carbon atoms by polymerizing ethylene or by copolymerizing ethylene with alkenes-1 having 3-15 carbon atoms in an inert solvent at such temperatures that a solution of the ethylene (co)polymer is formed, use being made of a catalyst composed of an organo-aluminium halide having the general formula $R'_m AlX_{3-m}$, in which the symbols R' are equal or differing and each represents a hydrocarbyl group with 1-10 carbon atoms, each X represents a halogen atom and $0 < m < 3$, an organo-magnesium compound that is dissolved in an inert solvent, and has the formula $MgR^2_2$, in which the symbols $R^2$ are equal or differing and each represents a hydrocarbyl group with 2-20 carbon atoms and the groups $R^2$ together contain at least 6 carbon atoms, a tetravalent titanium compound and an alcohol.

Such catalysts and the (co)polymerization of ethylene using them are described in British patent specification 1,235,062. Though those catalysts are very active, and high yields can be obtained at short residence times, it has been found that under certain conditions, particularly in polymerizations at relatively high temperatures of 175 ¤C or higher, their properties are less than ideal. At such high temperatures the activity and the conversion decrease. Especially for the copolymerization of ethylene with alkenes-1 with at least 5 carbon atoms, a high conversion is desired and a decrease in conversion is disadvantageous.

Since a number of years, the interest in and the application of copolymers of ethylene with such amounts of alkenes-1, with at least 5 carbon atoms that the density is at most 940 kg/m$^3$, has increased strongly. Such copolymers, that are prepared according to a so-called low-pressure process with transition metal catalysts, are generally denoted LLDPE (linear low density polyethylene). Besides in density, LLDPE also in other respects shows similarities with the so-called LDPE, which can be prepared according to a high-pressure process known since long. LLDPE, for instance, is highly suitable for processing into films and is therefore often produced and marketed as film quality. Besides similarities, there are also differences between LLDPE and LDPE. In particular the tear resistance and impact resistance of LLDPE are greater than those of LDPE, so that for the same strength thinner films can be used, allowing material savings and thus cost reductions.

LLDPE can be prepared in ways known per se for the copolymerization of ethylene with alkenes-1 with 3-15 carbon atoms with transition metal catalysts. In particular, ethylene is copolymerized with alkenes-1 with 5-12 carbon atoms, since the copolymers with propylene or butylene possess less favourable properties and, on the other hand, alkenes-1 with more than 12 carbon atoms are expensive, it is difficult to obtain them in pure form, and they have a low polymerization activity. Otherwise they can be used for the preparation of LLDPE. In the presence of alkenes-1 with at least 5 carbon atoms in the polymerization medium a number of usual polymerization methods appear to proceed less satisfactorily.

In the gas-phase polymerization known per se, the higher boiling point of, for instance, hexene or octene than that of propylene or butylene easily leads to condensation of those higher alkenes on the catalyst placed on a solid carrier, resulting in disturbance of the polymerization process.

In suspension polymerization, too, the presence of higher alkenes-1 is disadvantageous. At the usual polymerization temperatures, copolymers of ethylene with, for instance, hexene or octene, in such amounts that the density is at most 940 and preferably at most 935, are better soluble and have a better swelling power in the usual dispersants than homopolymers or copolymers with a low propylene or butylene content and with densities that exceed 940 kg/m$^3$.

It is known that ethylene polymers consist of a number of fractions with differing molecular weights (molecular weight distribution). The fractions of ethylene copolymers with such amounts of higher alkenes-1 that the density is at most 940 and generally less than 935 kg/m$^3$ that possess the lowest average molecular weights are in most cases at least partly soluble in the dispersant at the temperature of the suspension polymerization, while fractions of higher molecular weight precipitate in more or less strongly swollen form. Working up of such swollen polymers and recirculation of the dispersant containing dissolved low-molecular fractions is difficult and cumbersome and has a strongly cost-increasing effect.

The above drawbacks are not encountered in the solution polymerization, which is carried out at temperatures of 120 °C or higher and which yields a solution of the polymer. In solution polymerization, however, the dissipation of the polymerization heat may present problems. Cooling through the wall or through cooling devices in the reactor may easily lead to polymer deposition on the cooling surfaces. This phenomenon particularly occurs when the polymerization temperature is only little above the melting point of the polymer, for instance 150-160 °C, and the cooling temperature must be lower. When the polymerization temperature is chosen higher, the cooling temperature can also be chosen higher, so that it becomes higher than the melting point and polymer deposition will not or hardly occur.

High polymerization temperatures in addition are energetically attractive. The higher the temperature, the lower the cooling requirements during the polymerization, and the lower the amount of energy required for working up. The polymerization temperature can be adjusted through cooling of the reactor feed (monomer and solvent) and through cooling of the reactor. The disadvantages of reactor cooling have already been pointed out above. The discharge of heat when the feed and/or the reactor is cooled requires energy, but also the working up of the polymer solution demands energy. The polymer is usually recovered from the solution by evaporation of the solvent. As the temperature of the solution becomes higher and further approaches the critical temperature of the solvent or even reaches or exceeds this temperature, the heat of evaporation will be smaller or even become zero, resulting in minimal evaporation enthalpy.

While high polymerization temperatures have the advantages described above, on the other hand the activity of the usual transition metal catalysts decreases with increasing temperature. The conversion, too, decreases. At unchanged residence times this means that the polymer yield decreases, as a result of which the amounts of catalyst residues in the polymer increase and it soon becomes necessary to wash out the polymer. To obtain a low catalyst residue content the residence time in the polymerization reactor would have to be lengthened, but this will in its turn imply a capacity reduction.

Especially in the preparation of LLDPE, the conversion should, for reasons to be explained in the following, be as high as possible. Though on the one hand it is highly desirable for the ethylene (co)-polymerization to take place at high temperatures, i.e. temperatures of at least 175 $^\circ$C and if possible 200 $^\circ$C or higher, on the other hand the catalysts known in the art appear to have a too low activity at such high temperatures and the conversion is too low.

In the copolymerization of ethylene with propylene the polymerization rate of propylene is substantially lower than that of ethylene. In ethylene-butylene mixtures the difference in polymerization rates is even larger. With higher alkenes-1 the differences increase still further, but the deviations relative to a next-lower alkene with one carbon atom less become smaller.

For a long time already, besides ethylene homopolymers also ethylene copolymers with slight amounts of propylene and/or butylene have been produced. To produce similar copolymers with an equal weight percentage with, for instance, hexene-1 or octene-1, proportionally larger amounts of hexene-1 or octane-1 should be incorporated in the monomer mixture because the reactivity of hexene-1 or octane-1 is lower than that of propylene or butylene-1.

However, LLDPE with densities lower than 940 and preferably lower than 935 kg/m$^3$ contains larger weight amounts of comonomer than the ethylene copolymers with propylene and/or butylene with densities in excess of 940 kg/m$^3$ that have been commonly applied so far. To this end, proportionally large amounts of hexene-1 or octane-1 will have to be incorporated in the monomer mixture. At the start of a batchwise polymerization, relatively much ethylene and little hexene-1 or octene-1 is incorporated, and by the end ever more hexene-1 or octene-1 is incorporated. In a continuous polymerization this is of course influenced by the continuous supply of monomer mixture and the discharge of monomer residues. At degrees of ethylene conversion of less than 85 % it has now been found that also in continuous polymerizations the hexene-1 or octene-1 conversion is low and for the preparation of LLDPE large amounts are to be incorporated in the monomer mixture. Particularly when copolymers are to be prepared with a high comonomer content that may reach values of up to 15 moles %, the monomer mixture to be polymerized will have to contain substantially more than 15 moles % comonomer. The larger part of the comonomer is not converted and is recovered with solvent, from which it is to be separated. The reason for this is that the recovered mixture will always contain low-molecular material and isomerized comonomer, so that it is not suitable for re-use without purification. At high ethylene conversions of at least 90 % and in particular 95 %, the comonomer conversion increases rapidly with increasing ethylene conversion, and the amount of comonomer that ends up in the recirculation decreases rapidly.

A high ethylene conversion therefore is highly desirable, particularly for the preparation of LLDPE, though it will of course also offer advantages in the preparation of ethylene homopolymers and ethylene copolymers with a low comonomer content.

Some attempts have already been made to develop catalysts that are sufficiently active also at high temperatures. NL-A-76.05544, for instance, describes catalysts that can give high ethylene polymer yields at temperatures above 150 $^\circ$C, for instance from 185 $^\circ$C to 220 $^\circ$C and higher. These catalysts are composed of an organomagnesium compound and an organo-metal compound that solubilizes the organomagnesium compound, which usually is an organo-aluminium compound, a transition metal compound, which usually is a titanium compound, and a non-metal halide, for instance hydrogen chloride. A disadvantage of these catalysts is the large amount of halide, particularly chloride relative to titanium. As a result, the polymer contains proportionally much chlorine. Chlorine is undesirable in ethylene polymers because of the corrosion occurring in processing of chloride-containing polymers. It is therefore attempted to keep the chlorine content of ethylene polymers as low as possible. To achieve this without washing out the catalyst, the catalyst must be very active and contain little chlorine.

In example IV of the above-mentioned application it is shown that a catalyst from ethyl aluminium dichloride, dibutyl magnesium.2-triëthylaluminium and tetra(isopropoxytitanium) gives high yields at 150 °C, at 170 °C a yield that is only 37 % of that at 150 °C and no measurable yields at 185 °C.

NL-A-80.04492 and 80.04493 also describe catalysts that are very active at temperatures in excess of 150 °C and give high ethylene polymer yields. As in the usual modes of realization of the NL-A-76.05544, here too one of the catalyst components is an organo-magnesium compound that is soluble in hydrocarbons. As catalyst component use is also made of a halide, which may be a halide of boron, silicon, germanium, tin, phosphorus, antimony, bismuth or zinc. The halide for instance is a chloride.

In NL-A-76.05544; 80.04492 and 80.04493 no data are given on the conversion which, as explained in the preceding, is of great importance for technical-scale preparation of LLDPE.

The efforts to achieve a high conversion are obstructed in that the catalyst activity decreases at higher temperatures, so that the conversion becomes lower, and alkenes-1 with at least 5 carbon atoms have a chain-terminating effect, which also reduces the conversion. Owing to the reduction of the conversion more comonomer is to be incorporated in the monomer mixture to achieve the same incorporation as at a high conversion. For the preparation of LLDPE relatively large amounts of comonomer are to be incorporated by polymerization, which of course requires proportionally high concentrations of comonomer in the monomer mixture.

It has now been found that the disadvantages described above can be eliminated or at least be reduced dramatically by polymerizing ethylene or copolymerizing ethylene with one or more alkenes-1 with 3-15 carbon atoms in an inert solvent, at such temperatures that a solution of the ethylene (co)polymer is formed, use being made of a catalyst composed of an organo-aluminium halogen compound having the general formula $R'_mAlX_{3-m}$, in which the symbols $R'$ are equal or differing and each represents a hydrocarbyl group with 1-10 carbon atoms, each X represents a halogen atom, preferably a chlorine atom, and $0 < m < 3$, an organo-magnesium compound, that is dissolved in an inert solvent and has the formula $MgR^2_2$, in which the symbols $R^2$ are equal or differing and each represents a hydrocarbyl group with 2-20 carbon atoms, and the groups $R^2$ together contain at least 6 carbon atoms, a tetravalent titanium compound and an alcohol, the (co)polymerization being effected - and this characterizes the invention - at a temperature of at least 180 °C, use being made of a catalyst that is composed by mixing the aluminium compound and the magnesium compound at a temperature below 100 °C and in the absence of monomer(s), their ratio being such that the molar ratio between halogen and magnesium is from 2 : 1 to 20 : 1, mixing an alcohol having the formula $R^3OH$, in which $R^3$ represents an alkyl group with 1-20 carbon atoms, with the mixture of aluminium compound and magnesium compound, this also being effected at below 100 °C and in the absence of monomer(s), the amounts used being such that the molar ratio between alcohol and hydrocarbyl groups bound to magnesium and aluminium is from 0.1 to 0.9, and by adding, after mixing of the aluminium compound and the magnesium compound and before, simultaneously with or after combining with the alcohol, a titanium compound having the formula $Ti(OR^4)_{4-n}X_n$, in which $R^4$ represents an alkyl group with 1-10 carbon atoms and X a halogen atom and $0 \leqslant n \leqslant 4$, the amounts added being such that the molar ratio between magnesium and titanium is 2 : 1 to 200 : 1.

The catalyst for the (co)polymerization of ethylene at such temperatures that a solution of the ethylene (co)polymer is formed, is composed of an organo-aluminium halide having the general formula $R'_mAlX_{3-m}$, in which the symbols $R'$ are equal or differing and each represents a hydrocarbyl group with 1-10 carbon atoms, each X represents a halogen atom and $0 < m < 3$, an organo-magnesium compound that is dissolved in an inert solvent and has the formula $MgR^2_2$, in which the symbols $R^2$ are equal or differing and each represents a hydrocarbyl group with 2-20 carbon atoms and the groups $R^2$ together contain at least 6 carbon atoms, a tetravalent titanium compound and an alcohol, this process being characterized in that the aluminium compound and the magnesium compound are mixed at a temperature below 100 °C and in the absence of monomer(s), their ratio being such that the molar ratio between halogen and magnesium is from 2 : 1 to 20 : 1, the mixture thus obtained is mixed, also at below 100 °C and in the absence of monomer(s), with such an amount of an alcohol having the formula $R^3OH$, in which $R^3$ represents an alkyl group with 1-20 carbon atoms, that the molar ratio between alcohol and hydrocarbon groups bound to magnesium and aluminium is from 0.1 : 1 to 0.9 : 1, and the mixture of the aluminium compound and the magnesium compound is mixed, before, simultaneously with or after mixing with the alcohol, with such an amount of a titanium compound having the formula $Ti(OR^4)4-_nX_n$, in which $R^4$ represents an alkyl group with 1-10 carbon atoms and X a halogen atom and $0 \leqslant n \leqslant 4$, that the molar ratio between magnesium and titanium is 2 : 1 to 200 : 1.

Mixing of the aluminium compound and the magnesium compound is preferably effected at tempera-

4

tures above 0 °C, more particularly at temperatures of at least 15 °C.

During mixing of the halogen-containing aluminium compound and the magnesium compound a reaction occurs that yields an insoluble product that consists mainly of magnesium and halogen, in particular chlorine, but may also contain minor amounts of aluminium groups and alkyl groups. It is of great importance that the insoluble product remains well-suspended and that in the transport to the reactor no clogging occurs. To this end, the insoluble product should be fine. At low mixing temperatures the reaction product becomes coarser, as a result of which depositing and/or clogging may readily occur. In view of this the mixing temperature is at least 0 °C. The best results are obtained at temperatures of at least 15 °C, and these are therefore preferably applied. At higher mixing temperatures the catalyst activity appears to decrease. At temperatures of 100 °C or only slightly below this, the catalysts obtained are still quite usable, but at lower temperatures the activity appears to be greater. The most favourable results are obtained by mixing at temperatures of between 20 °C and approximately 35 °C, though above it, from 35 °C to approximately 50 °C, hardly anything is noticeable of a decrease in activity, so that this also is a very usable mixing temperature range.

Very good catalysts can thus be prepared by mixing the aluminium component and the magnesium component at a temperature of from 15 °C to 50 °C.

Mixing of the above-described mixture with the alcohol is to be effected in the same temperature range, at least the mixing temperature should not be higher than 100 °C, and preferably not higher than 60 °C. Lower temperatures than the mixing temperature of the aluminium component and the magnesium component are possible but not very practical, for there are no advantages in cooling the mixture of the aluminium compound and the magnesium compound and then adding the alcohol. In themselves, temperatures of 15 °C or lower in this phase of the catalyst preparation are not detrimental. Temperatures somewhat higher than the temperature at which the aluminium component and the magnesium component are mixed are quite possible. It is possible for the temperature of the components in the feed to the reactor to be increased gradually, and then the place at which the alcohols are added may be warmer than the place at which the aluminium component and the magnesium component are mixed.

The titanium component can be added at any desired moment after mixing of the aluminium component and the magnesium component. The temperature conditions entail that the aluminium component and the magnesium component and the alcohol are to be mixed outside the polymerization reactor, for instance in a mixing zone, into which first the aluminium component and the magnesium component are introduced and then the alcohol, upon which the whole is introduced into the reactor. The titanium component can now be added after mixing of the aluminium component and the magnesium component in the mixing zone, before, simultaneously with or after the alcohol, or be supplied directly to the reactor, to which then also a stream consisting of the aluminium component, the magnesium component and the alcohol is supplied, so that the total catalyst composition is not formed until in the reactor.

By preference the titanium compound is added after the alcohol has been combined with the aluminium component and the magnesium component, preferably still in the mixing zone, though it is possible for the titanium compound to be supplied directly to the reactor.

Surprisingly, catalysts prepared according to the present invention appear to be very active at temperatures of at least 180 °C and they are found to make the copolymerization of ethylene with alkenes-1 with at least 5 carbon atoms proceed at conversions of at least 85 %, mostly more than 90 %.

The catalysts according to the present invention are very active, allowing the use of very short residence times. A short residence time has the great advantage that the reactor can be small. Thus, when using the catalysts according to the invention in a reactor of 5 m$^3$, an annual production of more than 50,000 tonnes can be reached. Seals of, for instance, stirrer shafts soon present problems in reactors larger than 5 m$^3$, for instance 10 m$^3$ or more. Homogenization of the viscous polymer solution in the reactor also proceeds less satisfactorily with increasing reactor volume.

The polymerizations are effected at temperatures on the order of 200 °C and under pressure. When using larger reactors, the wall thickness will also increase, which not only makes the reactor expensive but also is unfavourable for the discharge of polymerization heat through the wall. Said discharge is further impeded because the surface area to volume ratio becomes less favourable.

When using the subject catalysts, residence times of 10 minutes or less will suffice. At residence times of 5 minutes such high yields are still obtained that no wash treatment for removal of catalyst residues need be applied.

In the preparation of the subject catalysts by preference such amounts of the components are chosen that the molar ratio of halogen in the aluminium compound to magnesium is 2 : 1 to 10 : 1 and/or the molar ratio of magnesium to titanium is 2 : 1 to 10 : 1 and/or the molar ratio of alcohol to alkyl groups bound to magnesium and aluminium is from 0.1 to 0.5.

In the British patent specification already quoted, (GB-A-1.235.062) catalysts of comparable compositions are described. On page 2, line 16 and following, it says that the activator, which may be an alcohol, can be added during or after the preparation of the aluminium compound and/or the magnesium compound. Many other modes of realization are mentioned, but by preference the activator is made to react with the aluminium component. In Example 1 all 101 runs are made by heating pentamethyl heptane at 140 °C and saturating it with ethylene, following with the activator, the aluminium component, the magnesium component and the titanium component were added. Run 82, made at 200 °C, after 1 hour gave a yield of only 30 g polyethylene per mmole titanium whereas run 31 gave a ninefold yield of 271 g polyethylene per mmole titanium with the same catalyst composition at 140 °C in 30 minutes. In Example 6 decanol, sesquiethyl aluminium chloride, dibutyl magnesium and tetrabutyl titanate were successively mixed at temperatures ranging from -20 °C tot +10 °C. The presence of ethylene appears to have little effect, but with increasing temperature the activity of the catalyst appears to decrease. At higher polymerization temperatures the activity decreases further.

In the preceding it has been already stated that NL-A-76.05544 describes the rapid decrease of the activity with increasing temperature of a catalyst from ethyl aluminium dichloride dibutyl magnesium and tetraisopropoxytitanium.

On page 2, lines 46-54 of British patent specification GB-A-1,235,062 it is remarked that when the activator is supplied the presence of activating contaminants in the solvent and the monomer and of activator groups which may be bound to titanium must be taken into account. From the comparative test of Example IV of NL-A-76.05544 it appears that at a polymerization temperature of 150 °C the amount of the activator residues in the titanium compound is sufficient to obtain a very active catalyst. This catalyst, however, no longer works at 185 °C according to the mentioned Example IV.

Though these original experimental data indicated that the catalysts of GB-A-1,235,062 were unsuitable for copolymerization of ethylene at high temperatures of at least 180 °C at high yields and high conversions, it has been found that when using the present preparation method catalysts are obtained that are very active and capable of copolymerizing ethylene at high conversions at a temperature of at least 180 °C.

As a result of the unexpectedly high activity of the catalysts prepared according to the present process, the ethylene (co)polymers prepared with them at temperatures of at least 180 °C and by preference at least 200 °C contain such a small amount of catalyst residues that washing out of these is not necessary. As the aluminium compound generally is the sole source of halogen, the halogen, particularly the chlorine, content is low.

Though in the preceding emphasis has often been placed on the advantages of the present polymerization processes for the preparation of LLDPE, it will be clear that the high activity and the high conversions at temperatures of at least 180 °C also are very favourable for the preparation of ethylene homopolymers and ethylene (co)polymers with small amounts of alkene-1 with at least 3 carbon atoms such as, for instance, propylene and/or butylene.

Alkenes capable of being copolymerized with ethylene according to the present invention are, for instance, propylene, butylene-1, pentene-1, 3-methylbutylene-1, hexene-1, 4-methylpentene-1, octane, decene, dodecene. Obviously, when reference has been made in the preceding to hexene-1 and/or octene-1, this is only by way of example and instead one or more of the alkenes-1 summed up here may just as well be used.

The aluminium compound to be used for the catalyst compositions may be a monoalkyl aluminium dihalide, a dialkyl aluminium halide or a sesquialkyl aluminium halide. By preference, the chlorides are used, and preferably a sesquialkyl aluminium chloride. As ethyl- and isobutyl aluminium chloride are commercially available, these will preferably be used, but other alkyl compounds, such as the methyl-, propyl-, butyl-, hexyl and octyl aluminium chlorides (di-, sesqui- and mono-) may also be used.

Organo-magnesium compounds made soluble in hydrocarbons, in particular dialkyl magnesium compounds are also commercially available and are already extensively described in state of the art patents, for instance in the Dutch patent applications already referred to, NL-A-76.05544; 80.04492 and 80.04493, and these are preferably used. The preparation of dialkyl magnesium compounds is described in US patent specification 3.737.393.

The hydrocarbyl groups bound to magnesium may also be cycloalkyl or aryl groups.

The titanium compounds used for the catalyst composition in the present invention are the halides, in particular the chloride, the alkoxy halides, in particular alkoxy chlorides, and the alcoholates. By preference a tetraalkoxy titanium compound is used. A part of the titanium compound may be trivalent titanium. The titanium compound must at least for the larger part and preferably entirely be tetravalent.

British patent specification 1.235.062 states that in determining the total amount of activator, the presence of contaminants in the solvent and in the monomer is to be taken into account. In the present method, the amounts of alcohol or other oxygen compounds in solvent and monomer(s) have to be not greater than necessary. Only the addition at temperatures below 100 °C, as described in the preceding, appears to have an advantageous effect. The addition cannot be transferred to the reactor, for then the effect becomes the opposite. Neither does the addition of the alcohol to the magnesium compound or to the aluminium component appear to yield catalysts having the favourable properties described here. The applicant assumes that first the reaction product of the aluminium compound and the magnesium compound must be formed and that the alcohol in some way or other acts upon this product. What reaction mechanisms are involved is as yet unclear.

The polymerization is effected in a way known per se. In general the catalyst is prepared in advance and added in such amounts that the amount of titanium in the polymerization medium is 0.001 to 1 mmole/1 and by preference 0.01 to 0.06 mmoles/1.

As dispersant, both in the preparation of the catalyst and in the polymerization, any liquid can be used that is inert relative to the catalyst system, for instance one or more saturated, straight or branched aliphatic hydrocarbons such as butanes, pentanes, hexanes, heptanes, pentamethyl heptane or petroleum fractions such as light or regular-grade gasoline, isopar, naphtha, kerosene, gas oil. Aromatic hydrocarbons, for instance benzene or toluene or halogenated aliphatic or aromatic hydrocarbons, for instance tetrachloroethane, can be used but both because of the cost price and for safety reasons such solvents will generally not be used for production on a technical scale. In technical-scale polymerizations, therefore, preferably the inexpensive aliphatic hydrocarbons or mixtures thereof, as marketed by the petrochemical industry, are used as solvent. Pretreatment of such solvents, for instance drying or purification, often is required. The average one skilled in the art will definitely be able to do this. Cyclic hydrocarbons, such as cyclohexane, can of course also be used as solvent.

By preference the polymerization is effected at temperatures of 180 to 260 °C, more particularly at temperatures between 200 and 240 °C.

The polymer solution obtained upon polymerization can be worked up in a way known per se, the catalyst generally being deactivated in some phase of working up. The catalysts according to the present invention are so active that the amount of catalyst in the polymer, in particular the transition metal content, is so low that removal of catalyst residues can be dispensed with. If this is considered necessary, the polymer can of course be subjected to a wash treatment to reduce the residual content of transition metal even further.

The polymerization can be effected discontinuously or continuously at atmospheric pressure, but also at elevated pressure, up to approximately 1000 bar, or even higher pressures. By effecting the polymerization under pressure, the polymer yield can be increased further, which may contribute to the preparation of a polymer with a very low content of catalyst residues. By preference the polymerization is effected at pressures of 1-200 bar, and more in particular of 10-100 bar.

Pressures in excess of 100 bar soon give rise to technological objections, in particular with respect to the stirrer shaft seals. Much higher pressures, of 1000 bar and more, can however be used if the polymerization is effected in so-called high-pressure reactors that can be used for the preparation of LDPE. As inert diluent then often limited amounts of ethane or propane are used. The conversions should then be lower than as described in the preceding, so that the advantage of the high conversion then plays a smaller role. Such polymerizations are, however, effected at rather high temperatures of at least 180 °C and preferably at least 200 °C, and the advantage of the subject catalysts that they are very active at high temperatures is fully retained.

In the present process modifications known per se can be applied. Thus, for instance, the molecular weight can be controlled by the addition of hydrogen or other modifying agents customarily applied. The polymerization can also be effected in several steps, arranged either in parallel or in series, in which, if desired, varying catalyst compositions, temperatures, residence times, pressures, hydrogen concentrations, etc. are used. Products may for instanc be prepared that have such a broad molecular weight distribution as to give them a high flow index by choosing the conditions, for instance pressure, temperature and hydrogen concentration, in one step such that a polymer with a high molecular weight is formed, while the conditions in an other step are chosen such that a polymer with a lower molecular weight is formed.

To explain and elucidate the invention without limiting it, a number of continuous polymerizations were effected in a double-walled 1-litre autoclave. To this end the autoclave was entirely filled with gasoline that had been purified over molecular sieves. In an absorber ethylene and, optionally, hydrogen are dissolved in purified gasoline. Copolymerizations are effected by adding octene to the gasoline stream containing the ethylene and the optional hydrogen. The reactor temperature is set using the jacket heating of the autoclave and kept at the desired value during the polymerization, which may necessitate cooling. The pressure in the reactor is set so that the reactor remains completely filled with liquid.

As catalyst components use is made of a 6.0 millimolar solution of ethyl-n-butyl magnesium (EBM) in gasoline, solubilized with 1 mole % triethyl aluminium, with respect to EBM, a 30 millimolar solution of sesquiethyl aluminium chloride (SEAC) in gasoline, a 1.5 millimolar solution of tetrabutoxy titanium (TBT) in gasoline, and a 7.0 millimolar solution of isopropanol (IPA) in gasoline.

In a mixing zone before the reactor the aluminium compound and the magnesium compound are added together and subsequently the isopropanol is added. In a number of runs the titanium compound is added simultaneously with the isopropanol, in others the titanium compound is separately supplied to the reactor. The components are added in such amounts that the desired concentrations are obtained in the reactor.

## Comparative examples 1 through 10

A series of copolymerizations was effected using a catalyst without the isopropanol component. The catalyst composition and the other polymerization conditions, the ethylene conversion and the density of the polymer obtained are shown in Table I.

The conversion is high at 180 °C and is hardly influenced by increasing amounts of octane. At 185 °C the conversion is somewhat lower, with about 300 g of octane per hour. The density of the ethylene copolymer of Example 5 is virtually the same as that of Example 2. At somewhat larger amounts of octene (Example 6; 440 g), the conversion decreases noticeably. The amount of octene copolymerized decreases so much relative to the concentration in the starting mixture that in Example 9 a somewhat higher density is obtained than in Example 8. At 200 °C the conversion still is only 87.5 %. Though 600 g/h of octane is introduced, the conversion thereof apparently is so low that the density of the polymer is 926 kg/m$^3$.

## Examples 11 through 17

At 200 °C and 190 °C a number of runs were made at the same monomer : comonomer ratios. These runs are summarized in Table II. By way of comparison, Example 10 is also included in this table. From 11 through 13 it appears that at increasing amounts of isopropanol the conversion increases and the density decreases, i.e. that increasing amounts of octane are copolymerized. From 15 through 17 the same effect is evident. For comparative purposes, no isopropanol was added in run 14. The conversion in said run is the lowest and the density the largest.

## Examples 18 through 21

Ethylene was polymerized at 230 °C. These runs are summarized in Table III. The isopropanol component appears to increase the conversion strongly.

## Examples 22 and 23

Ethylene was copolymerized with octane at 230 °C. The runs are summarized in Table IV. A run carried out similarly to Example 22, no isopropanol being added to the catalyst composition, did not yield measurable amounts of polymer. The conversion was zero.

The polymerization rate of the present catalysts is very high. In the 1-litre reactor the residence time is 1/V hours, V denoting the total feed volume (gasoline, ethylene, comonomer, catalyst components) in litres. In the examples described in the preceding the residence time is about 5 minutes.

The activity of the subject catalysts is large also at high temperatures. Thus, in Example 21, at a polymerization temperature of 230 °C, 90.3 % of 1125 n1, i.e. 1406 g ethylene, is converted. Per hour, 1270 g polymer is formed with 0.035 x 7.4 = 0.26 mmoles titanium component containing 12.6 mg titanium. The polymer therefore contains only 10 ppm titanium. Also in the copolymerizations in Examples 22 and 23 the polymerization rate is so high that in the very short residence time of about 5 minutes the ethylene conversion is about 91 %, a copolymer being obtained that contains only 12 ppm titanium.

TABLE I

| Example No. | SEAC mmoles/l | EBM mmoles/l | TBT mmoles/l | IPA mmoles/l | ethylene nl/h | octene g/h | $H_2$ nl/h | gasoline l/h | temp °C | conversion % | density kg/m³ |
|---|---|---|---|---|---|---|---|---|---|---|---|
| 1 | 1.29 | 0.26 | 0.05 | 0 | 950 | 205 | 0.4 | 7.3 | 180 | 96.4 | 927 |
| 2 | 1.28 | 0.26 | 0.05 | 0 | 944 | 295 | 0.4 | 7.3 | 180 | 96.3 | 925 |
| 3 | 1.26 | 0.25 | 0.05 | 0 | 944 | 435 | 0.4 | 7.3 | 180 | 96.5 | 922 |
| 4 | 1.27 | 0.25 | 0.05 | 0 | 944 | 600 | 0.4 | 7.3 | 180 | 95.5 | 918 |
| 5 | 1.27 | 0.26 | 0.05 | 0 | 950 | 305 | 0.4 | 7.3 | 185 | 95.7 | 925 |
| 6 | 1.26 | 0.25 | 0.05 | 0 | 950 | 440 | 0.4 | 7.3 | 185 | 92.5 | 922 |
| 7 | 1.30 | 0.26 | 0.05 | 0 | 946 | 220 | 0.3 | 7.3 | 190 | 95.8 | 926 |
| 8 | 1.30 | 0.26 | 0.05 | 0 | 945 | 330 | 0.3 | 7.3 | 190 | 95.3 | 925 |
| 9 | 1.25 | 0.24 | 0.05 | 0 | 946 | 485 | 0.3 | 7.3 | 190 | 91.6 | 926 |
| 10 | 1.30 | 0.26 | 0.05 | 0 | 950 | 600 | 0.3 | 7.3 | 200 | 87.5 | 926 |

TABLE II

| Example No. | SEAC mmoles/l | EBM mmoles/l | TBT mmoles/l | IPA mmoles/l | ethylene nl/h | octene g/h | $H_2$ nl/h | gasoline l/h | temp °C | conversion % | density kg/m³ |
|---|---|---|---|---|---|---|---|---|---|---|---|
| 10 | 1.30 | 0.26 | 0.05 | 0 | 950 | 600 | 0.3 | 7.3 | 200 | 87.5 | 926 |
| 11 | 1.50 | 0.30 | 0.05 | 0.3 | 960 | 595 | 0.2 | 7.0 | 200 | 92.7 | 922.6 |
| 12 | 1.45 | 0.29 | 0.05 | 0.6 | 940 | 595 | 0.2 | 7.0 | 200 | 95.1 | 921.3 |
| 13 | 1.46 | 0.29 | 0.05 | 0.9 | 940 | 595 | 0.2 | 7.0 | 200 | 96.4 | 920.7 |
| 14 | 0.61 | 0.16 | 0.03 | 0 | 900 | 550 | 0 | 6.5 | 190 | 92.1 | 925.7 |
| 15 | 0.59 | 0.16 | 0.03 | 0.1 | 900 | 555 | 0 | 6.5 | 190 | 93.5 | 923.8 |
| 16 | 0.60 | 0.16 | 0.03 | 0.2 | 900 | 555 | 0 | 6.5 | 190 | 94.5 | 923.5 |
| 17 | 0.60 | 0.16 | 0.03 | 0.3 | 900 | 550 | 0 | 6.5 | 190 | 95.3 | 921.8 |

EP 0 126 515 B1

TABLE III

| Example No. | SEAC mmoles/1 | EBM mmoles/1 | TBT mmoles/1 | IPA mmoles/1 | ethylene nl/h | octene g/h | $H_2$ nl/h | gasoline l/h | temp °C | conversion % |
|---|---|---|---|---|---|---|---|---|---|---|
| 18 | 0.75 | 0.30 | 0.035 | 0.0 | 1125 | 0 | 0 | 7.4 | 230 | |
| 19 | 0.75 | 0.30 | 0.035 | 0.30 | 1125 | 0 | 0 | 7.4 | 230 | 78.1 |
| 20 | 0.75 | 0.30 | 0.035 | 0.40 | 1125 | 0 | 0 | 7.4 | 230 | 86.3 |
| 21 | 0.75 | 0.30 | 0.035 | 0.50 | 1125 | 0 | 0 | 7.4 | 230 | 90.3 |

TABLE IV

| Example No. | SEAC mmoles/1 | EBM mmoles/1 | TBT mmoles/1 | IPA mmoles/1 | ethylene nl/h | octene g/h | H₂ nl/h | gasoline 1/h | temp °C | conversion % |
|---|---|---|---|---|---|---|---|---|---|---|
| 22 | 1.0 | 0.4 | 0.045 | 0.40 | 900 | 360 | 0.16 | 5.8 | 230 | 91.5 |
| 23 | 1.0 | 0.4 | 0.045 | 0.55 | 900 | 640 | 0 | 5.8 | 230 | 90.6 |

**Claims**

1.  process for the preparation of polyethylene or of ethylene copolymers containing minor amounts of at most 15 moles % of one or more alkenes-1 with 3-15 carbon atoms by polymerizing ethylene or by copolymerizing ethylene with alkenes-1 having 3-15 carbon atoms in an inert solvent, at such temperatures that a solution of the ethylene (co)polymer is formed, use being made of a catalyst composed of an organo-aluminium halide having the general formula $R'_mAlX_{3-m}$, in which the symbols R' are equal or differing and each represents a hydrocarbyl group with 1-10 carbon atoms, each X represents a halogen atom and 0 < m < 3, an organo-magnesium compound that is dissolved in an inert solvent and has the general formula $MgR^2_2$, in which the symbols $R^2$ are equal or differing and each represents a hydrocarbyl group with 2-20 carbon atoms and the groups $R^2$ together contain at least 6 carbon atoms, a tetravalent titanium compound and an alcohol, this process being characterized in that the (co)polymerization is effected at a temperature of at least 180 ¤C using a catalyst that is composed by mixing the aluminium compound and the magnesium compound at a temperature below 100 ¤C and in the absence of monomer(s), their ratio being such that the molar ratio between halogen and magnesium is from 2 : 1 to 20 : 1, mixing an alcohol having the formula $R^3OH$, in which $R^3$ represents an alkyl group with 1-20 carbon atoms, with the mixture of the aluminium compound and the magnesium compound, this also being effected at below 100 ¤C and in the absence of monomer(s), the amounts used being such that the molar ratio between alcohol and hydrocarbyl groups bound to magnesium and aluminium is from 0.1 to 0.9, and by adding after mixing of the aluminium compound and the magnesium compound and before, simultaneously with or after combining with the alcohol, a titanium compound having the formula $Ti(OR^4)_{4-n}X_n$, in which $R^4$ represents an alkyl group with 1-10 carbon atoms and X a halogen atom and $0 \leqslant n \leqslant 4$, the amounts added being such that the molar ratio between magnesium and titanium is from 2 : 1 to 200 : 1.

2. Process according to claim 1, characterized in that in preparing the catalyst the aluminium compound and the magnesium compound are mixed at temperatures above 0 ¤C.

3. Process according to claim 2, characterized in that in preparing the the aluminium compound and the magnesium compound are mixed at temperatures of at least 15 ¤C.

4. Process according to one or more of claims 1-3, characterized in that in preparing the catalyst the aluminium compound and the magnesium compound are mixed at temperatures of at most 50 ¤c.

5. Process according to one or more of claims 1-4, characterized in that in preparing the catalyst the titanium compound is added after the alcohol has been combined with the aluminium compound and the magnesium compound.

6. Process according to one or more of claims 1-5, characterized in that a catalyst is prepared or used in which the halogen : magnesium ratio amounts to 2 : 1 to 10 : 1.

7. Process according to one or more of claims 1-6, characterized in that a catalyst is prepared or used in which the magnesium: titanium molar ratio amounts to 2 : 1 to 10 : 1.

8. Process according to one or more of claims 1-7, characterized in that a catalyst is prepared or used in which the molar ratio between ROH and the total of alkyls bound to magnesium and aluminium amounts to 0.1 to 0.5.

9. Process according to claim 1, characterized in that the polymerization is effected at at least 200 ¤C.

**Revendications**

1. Procédé de préparation de polyéthylène ou de copolymères d'éthylène contenant de faibles proportions ne dépassant pas 15 moles% d'un ou plusieurs alcènes-1 contenant 3 à 15 atomes de carbone par polymérisation d'éthylène ou par copolymérisation d'éthylène avec des alcènes-1 ayant de 3 à 15 atomes de carbone dans un solvant inerte à des températures telles qu'une solution de (co)polymère d'éthylène soit formée, en utilisant un catalyseur composé d'un halogénure d'organo-aluminium de formule générale $R'_mAlX_{3-m}$, dans laquelle les radicaux R', qui peuvent être identiques ou différents, représentent chacun un groupe hydrocarbyle de 1 à 10 atomes de carbone, chaque X est un atome d'halogène, et 0 < m < 3, d'un composé d'organo-magnésium dissous dans un solvant inerte et répondant à la formule générale $MgR^2_2$ dans laquelle les radicaux $R^2$, qui peuvent être identiques ou différents, représentent chacun un groupe hydrocarbyle de 2 à 20 atomes de carbone et les groupes $R^2$ conjointement contiennent au moins 6 atomes de carbone, d'un composé de titane tétravalent et d'un alcool, ce procédé étant caractérisé en ce qu'on effectue la (co)polymérisation à une température d'au moins 180° C, en utilisant un catalyseur qu'on prépare en mélangeant le composé d'aluminium et le composé de magnésium à une température inférieure à 100° C et en l'absence du ou des monomère(s), le rapport étant tel que le rapport molaire de l'halogène au magnésium soit compris entre 2:1 et 20:1, en mélangeant ensuite un alcool de formule $R^3OH$ dans laquelle $R^3$ est un radical alkyle de 1 à 20 atomes de carbone, avec le mélange du composé d'aluminium et du composé de magnésium, cette opération étant également effectuée au-dessous de 100° G et en l'absence du ou des monomère(s), les proportions utilisées étant telles que le rapport molaire entre l'alcool et les groupes hydrocarbyle liés au magnésium et à l'aluminium soit entre 0,1 et 0,9, puis en ajoutant, après mélange du composé d'aluminium avec le composé de magnésium et avant, simultanément ou après la combinaison avec l'alcool, un composé de titane de formule $T(OR^4)_{4-n}X_n$, dans laquelle $R^4$ est un radical alkyle de 1 à 10 atomes de carbone, X est un atome d'halogène et n est compris entre 0 et 4, les quantités ajoutées étant telles que le rapport molaire du magnésium au titane est compris entre 2:1 et 200:1.

2. Procédé selon la revendication 1, caractérisé en ce que, quand on prépare le catalyseur, on mélange le composé d'aluminium et le composé de magnésium à des températures de plus de 0° C.

3. Procédé selon la revendication 2, caractérisé en ce que, quand on prépare le catalyseur, on mélange le composé d'aluminium et le composé de magnésium à une température d'au moins 15° C.

4. Procédé selon l'une ou plusieurs des revendications 1 à 3, caractérisé en ce que, lorsqu'on prépare le catalyseur, on mélange le composé d'aluminium et le composé de magnésium à une température ne dépassant pas 50° C.

5. Procédé selon l'une ou plusieurs des revendications 1 à 4, caractérisé en ce que, quand on prépare le catalyseur, on ajoute le composé de titane après que l'alcool a été combiné avec le composé d'aluminium et le composé de magnésium.

6. Procédé selon l'une ou plusieurs des revendications 1 à 5, caractérisé en ce qu'on prépare ou utilise un catalyseur dans lequel le rapport halogène:magnésium est compris entre 2:1 et 10:1.

7. Procédé selon l'une ou plusieurs des revendications 1 à 6, caractérisé en ce qu'on prépare ou qu'on utilise un catalyseur dans lequel le rapport molaire du magnésium au titane est compris entre 2:1 et 10:1.

8. Procédé selon l'une ou plusieurs des revendications 1 à 7, caractérisé en ce qu'on prépare ou qu'on utilise un catalyseur dans lequel le rapport molaire de ROH au total des alkyles liés au magnésium et à l'aluminium est compris entre 0,1 et 0,5.

9. Procédé selon la revendication 1, caractérisé en ce qu'on effectue la polymérisation à une température d'au moins 200° C.

## Patentansprüche

1. Verfahren zur Herstellung von Polyäthylen oder Äthylencopolymeren mit einem Gehalt an geringeren Mengen von höchstens 15 Mol-% eines oder mehrerer Alkene-1 mit 3 bis 15 Kohlenstoffatomen durch Polymerisieren von Äthylen oder durch Copolymerisieren von Äthylen mit Alkenen-1 mit 3 bis 15 Kohlenstoffatomen in einem inerten Lösungsmittel bei solchen Temperaturen, daß eine Lösung des Äthylen(co)polymers gebildet wird, wobei ein Katalysator bestehend aus einem organoaluminiumhalogenid der allgemeinen Formel $R'_mAlX_{3-m}$, worin die Symbole R' gleich oder verschieden sind und jeweils einen Kohlenwasserstoffrest mit 1 bis 10 Kohlenstoffatomen bedeuten, jedes X ein Halogenatom darstellt und $0 < m < 3$ ist, einer organomagnesiumverbindung, die in einem inerten Lösungsmittel gelöst ist und die allgemeine Formel $MgR^2_2$ aufweist, worin die Symbole $R^2$ gleich oder verschieden sind und jeweils einen Kohlenwasserstoffrest mit 2 bis 20 Kohlenstoffatomen bedeuten und die Gruppen $R^2$ miteinander mindestens 6 Kohlenstoffatome enthalten, einer vierwertigen Titanverbindung und einem Alkohol verwendet wird, welches Verfahren dadurch gekennzeichnet ist, daß die (Co)-polymerisation bei einer Temperatur von mindestens 180° C unter Verwendung eines Katalysators durchgeführt wird, der durch Mischen der Aluminiumverbindung und der Magnesiumverbindung bei einer Temperatur unter 100° C und in Abwesenheit von Monomer(en), wobei ihr Verhältnis derart ist, daß das Molverhältnis zwischen Halogen und Magnesium 2 : 1 bis 20 : 1 beträgt, Mischen eines

Alkohols der Formel $R^3OH$, worin $R^3$ eine Alkylgruppe mit 1 bis 20 Kohlenstoffatomen darstellt, mit der Mischung der Aluminiumverbindung und der Magnesiumverbindung ebenfalls bei unterhalb 100°C und in Abwesenheit von Monomer(en), wobei die verwendeten Mengen derart sind, daß das Molverhältnis zwischen Alkohol und an Magnesium und Aluminium gebundenen Kohlenwasserstoffresten 0,1 bis 0,9 beträgt, und Zusetzen einer Titanverbindung der Formel $Ti(OR^4)_{4-n}X_n$, worin $R^4$ eine Alkylgruppe mit 1 bis 10 Kohlenstoffatomen bedeutet, X ein Halogenatom darstellt und $0 \leq n \leq 4$, wobei die zugesetzten Mengen derart sind, daß das Molverhältnis zwischen Magnesium und Titan 2 : 1 bis 200 : 1 beträgt, nach dem Mischen der Aluminiumverbindung und der Magnesiumverbindung und vor, gleichzeitig mit oder nach dem Vereinigen mit dem Alkohol gebildet wird.

2. Verfahren nach Anspruch 1, dadurch gekennzeichnet, daß beim Herstellen des Katalysators die Aluminiumverbindung und die Magnesiumverbindung bei Temperaturen oberhalb 0°C gemischt werden.

3. Verfahren nach Anspruch 2, dadurch gekennzeichnet, daß beim Herstellen des Katalysators die Aluminiumverbindung und die Magnesiumverbindung bei Temperaturen von mindestens 15°C gemischt werden.

4. Verfahren nach einem oder mehreren der Ansprüche 1 bis 3, dadurch gekennzeichnet, daß beim Herstellen des Katalysators die Aluminiumverbindung und die Magnesiumverbindung bei Temperaturen von höchstens 50°C gemischt werden.

5. Verfahren nach einem oder mehreren der Ansprüche 1 bis 4, dadurch gekennzeichnet, daß beim Herstellen des Katalysators die Titanverbindung zugesetzt wird, nachdem der Alkohol mit der Aluminiumverbindung und der Magnesiumverbindung vereinigt wurde.

6. Verfahren nach einem oder mehreren der Ansprüche 1 bis 5, dadurch gekennzeichnet, daß ein Katalysator hergestellt oder verwendet wird, in dem das Verhältnis Halogen : Magnesium 2 : 1 bis 10 : 1 beträgt.

7. Verfahren nach einem oder mehreren der Ansprüche 1 bis 6, dadurch gekennzeichnet, daß ein Katalysator hergestellt oder verwendet wird, in dem das Molverhältnis Magnesium : Titan 2 : 1 bis 10 : 1 beträgt.

8. Verfahren nach einem oder mehreren der Ansprüche 1 bis 7, dadurch gekennzeichnet, daß ein Katalysator hergestellt oder verwendet wird, in dem das Molverhältnis RHO zu den gesamten an Magnesium und Aluminium gebundenen Alkylgruppen 0,1 bis 0,5 beträgt.

9. Verfahren nach Anspruch 1, dadurch gekennzeichnet, daß die Polymerisation bei mindestens 200°C bewirkt wird.